# EUROPEAN PATENT APPLICATION

(11) **EP 2 400 625 A2**
(43) Date of publication of application: **28.12.2011**
(21) Application number: 11169987.2
(22) Date of filing: 15.06.2011
(51) Int. Cl.: H02J 7/00

(54) **Closed loop charger for lead-acid batteries**

(30) Priority: 22.06.2010 US 820191
(71) Applicant: Hill-Rom Services, Inc., Batesville, IN 47006 (US)
(72) Inventor: Hoffmann, Adam, Greensburg, IN Indiana 47240 (US); Frondorf, Michael M, Lakeside Park, KY Kentucky 41017 (US); Zhu, Shichun, Carmel, IN Indiana 46032 (US)
(74) Representative: Findlay, Alice Rosemary

(57) **Abstract**

Embodiments of apparatus and methods for charging a battery are disclosed. The apparatus may comprise a connector configured to electrically couple to a battery, an adjustable current source capable of supplying current to the connector at a plurality of charge rates, and a resistor network configured to bias the adjustable current source to supply current at one of the plurality of charge rates in response to a digital input signal. The method may comprise receiving a digital input signal having a plurality of bits, the digital input signal indicating a desired charge rate for the battery, configuring a resistor network in response to the digital input signal, biasing an adjustable current source using the configured resistor network, and supplying current to the battery at the desired charge rate using the adjustable current source.

## Description

The present disclosure generally relates to chargers for rechargeable batteries, such as lead-acid batteries, for example. In particular, the present disclosure relates to apparatus and methods for charging rechargeable batteries using an adjustable current source and a resistor network.

Rechargeable battery chargers, particularly those designed for lead-acid batteries, must take into account the state of charge ("SOC") of the battery during the charging process. The SOC of a battery is dependent on both the battery voltage and the battery temperature. Attempting to force too much current into a battery, without regard for the battery's SOC, can damage the battery, the charging circuit, or both. On the other hand, controlling the current and voltage applied by the charging circuit based on the SOC of the battery will maximize battery life and charge efficiency. For instance, a battery charger might apply a low current when the SOC is low, a high constant current for moderate to high SOC, and a low current when the battery is fully charged.

The present invention comprises one or more of the following features alone.

According to one aspect, an apparatus comprises a connector configured to electrically couple to a battery, an adjustable current source capable of supplying current to the connector at a plurality of charge rates, and a resistor network configured to bias the adjustable current source to supply current at one of the plurality of charge rates in response to a digital input signal. In some embodiments, the adjustable current source may be a transistor having a bias terminal electrically coupled to the resistor network. The apparatus may also include a plurality of switches configured to vary an overall resistance of the resistor network, each of the plurality of switches being controlled by a respective bit of the digital input signal. In some embodiments, each of the plurality of switches comprises a transistor having a bias terminal electrically coupled to the respective bit of the digital input signal. The resistor network may include a plurality of parallel branches, with each of the plurality of parallel branches including one or more resistors and being electrically coupled to one of the plurality of switches. In such embodiments, the resistors of the plurality of parallel branches may be configured such that the overall resistance of the resistor network decreases as a binary value of the digital input signal increases. The current supplied by the adjustable current source may increase in a substantially linear fashion with increases in the binary value of the digital input signal.

In other embodiments, the apparatus may also include a multi-function processor configured to determine a desired charge rate from among the plurality of charge rates and to generate the digital input signal corresponding to the desired charge rate. In some embodiments, the multi-function processor may be configured to determine the desired charge rate in response to one or more feedback signals indicating either the current supplied by the adjustable current source, the state of charge of a battery electrically coupled to the connector, or both. The apparatus may also include an analog-to-digital converter which processes the one or more feedback signals before transmission to the multi-function processor. In other embodiments, the multi-function processor may be remote from both the adjustable current source and the resistor network. In still other embodiments, the apparatus may also include a relay electrically coupled between the adjustable current source and a power supply. The relay may be configured to disconnect the adjustable current source from the power supply if an enable signal from the multi-function processor is not received.

According to another aspect, a method of charging a battery includes receiving a digital input signal having a plurality of bits, where the digital input signal indicates a desired charge rate for the battery. The method also includes configuring a resistor network in response to the digital input signal, biasing an adjustable current source using the configured resistor network, and supplying current to the battery at the desired charge rate using the adjustable current source. In some embodiments, configuring the resistor network may include operating a plurality of switches to vary an overall resistance of the resistor network, where each of the plurality of switches is controlled by one of the plurality of bits of the digital input signal. In such embodiments, each of the plurality of switches may increment the overall resistance of the resistor network when an associated bit of the digital input signal changes from a first logic value to a second logic value and decrement the overall resistance of the resistor network when the associated bit of the digital input signal changes from the second logic value to the first logic value. In other embodiments, operating the plurality of switches may include applying each of the plurality of bits to a bias terminal of a transistor. In still other embodiments, biasing the adjustable current source may include applying a current or a voltage generated by the resistor network to a bias terminal of a transistor.

According to yet another aspect, a circuit for charging a battery includes a transistor having first and second terminals electrically coupled between a power supply and a battery connector and having a bias terminal configured to control the amount of current permitted to flow between the first and second terminals. The circuit also includes a biasing network having a plurality of parallel branches, where each of the plurality of branches has a resistance electrically coupled between the bias terminal of the transistor and a switch that is controlled by a binary input. In some embodiments, the biasing network may include a first branch having a first resistance, a second branch having a second resistance, and a third branch having a third resistance, where the second resistance is approximately double the first resistance and the third resistance is approximately double the second resistance. In other embodiments, the biasing network may also include a fourth branch having a fourth resistance, where the fourth resistance is at least four times greater than the third resistance.

The invention will now be further described by way of example with reference to the accompanying drawings, in which:

The detailed description particularly refers to the accompanying figures, in which:

FIG. 1 is a simplified block diagram illustrating one embodiment of a battery charging system including a processor, a charging circuit, and a battery.

FIG. 2 is a circuit schematic illustrating one embodiment of the charging circuit of FIG. 1;

FIG. 3 is a graph illustrating the predicted current supplied by the charging circuit of FIG. 2 for each digital input signal at various supply voltages; and

FIG. 4 is a circuit schematic illustrating additional components of the charging circuit of FIG. 2.

In the following description, numerous specific details, such as types and interrelationships of hardware components and logic implementation choices, may be set forth in order to provide a more thorough understanding of the present disclosure. It will be appreciated, however, by one skilled in the art that embodiments of the disclosure may be practiced without such specific details. In other instances, control structures, gate level circuits, and full software instruction sequences have not been shown in detail in order not to obscure the invention. Those of ordinary skill in the art, with the included descriptions, will be able to implement appropriate functionality without undue experimentation.

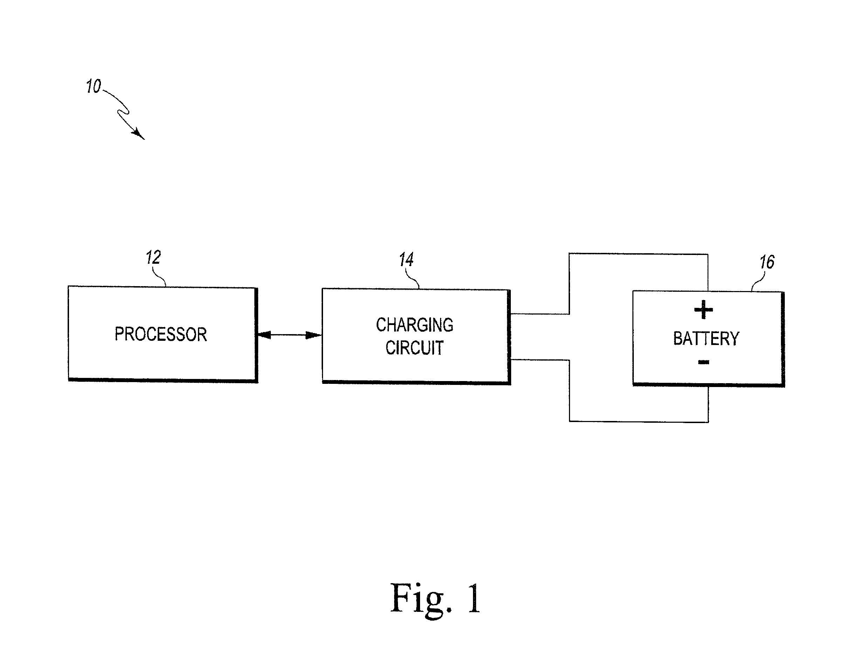

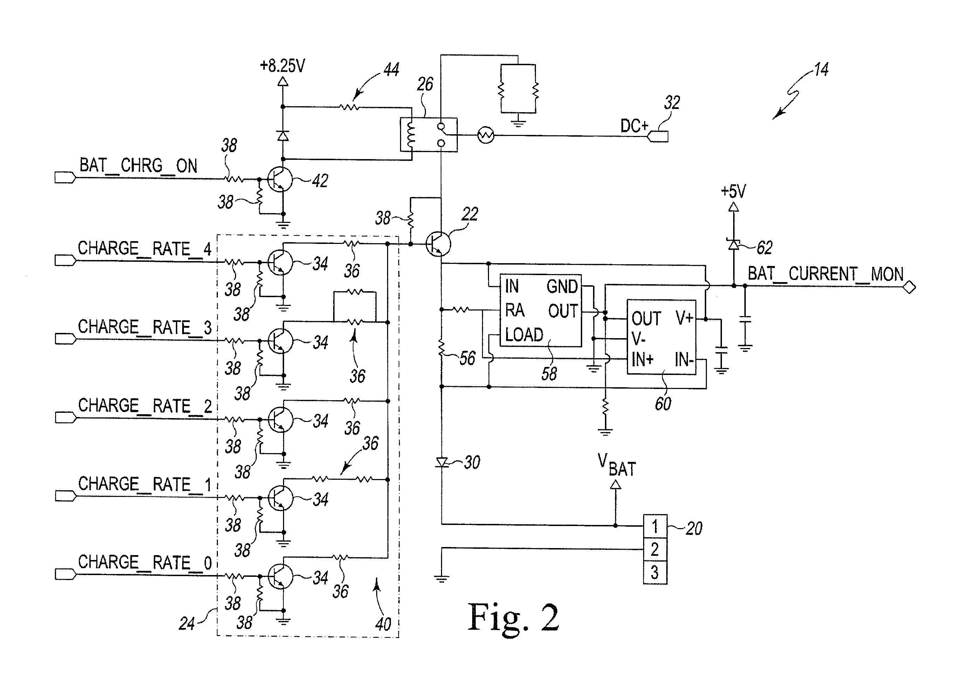

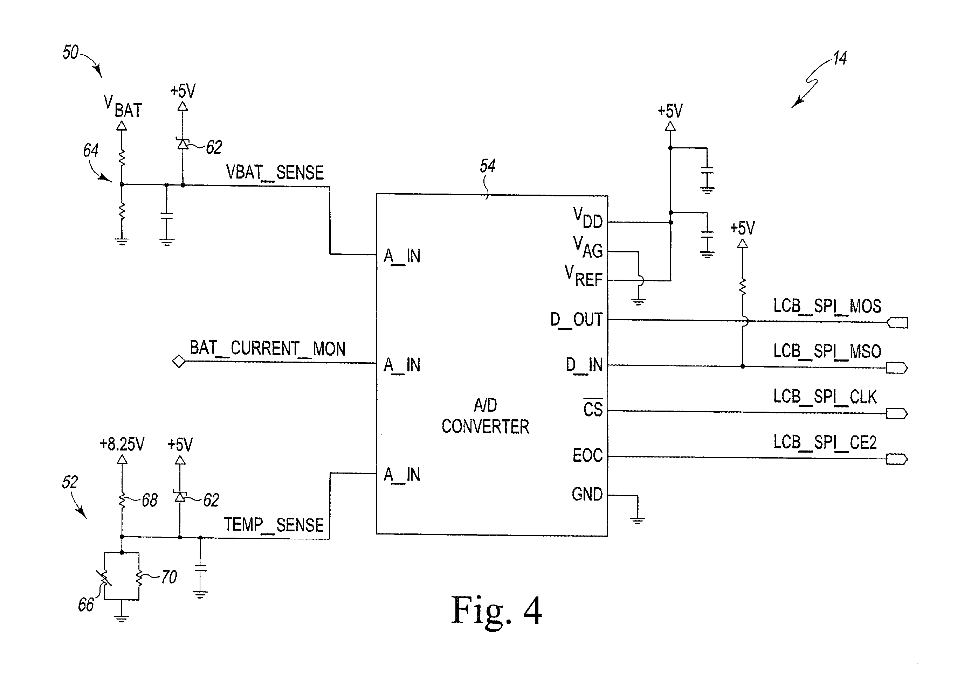

Referring now to FIG. 1, there is shown an illustrative embodiment of a battery charging system 10 including a processor 12, a charging circuit 14, and a battery 16. The battery 16 may be any type of rechargeable battery and is illustratively embodied as a lead-acid battery. The charging circuit 14 (shown in detail in FIGS. 2 and 4 and further described below) directly applies current and voltage to the battery 16 and monitors the SOC of battery 16. The processor 12 generally receives feedback signals from the charging circuit 14 regarding the SOC of battery 16 and controls the operation of charging circuit 14 to supply a desired charge rate to the battery 16. The processor 12 may be any type of processor capable of executing software/firmware, such as a microprocessor, digital signal processor, microcontroller, or the like.

In the illustrative embodiment, the processor 12 is a multi-function processor that is separate and remote from the charging circuit 14 (and the battery 16). According to the present disclosure, a "multi-function processor" is a processor which is not dedicated to controlling only one process. For instance, a processor which was dedicated to controlling the operation of the charging circuit 14 would not be a multi-function processor. On the other hand, a processor which also controls the operation of other system components (e.g., a processor that controls one or more therapeutic functions or features of a hospital bed, in addition to the charging circuit 14) is a multi-function processor. As used herein, the term "remote" refers to elements which are not physically proximate to one another. For instance, electronic components that reside on distinct printed circuit boards or in separate computing devices are remote from one another.

Various components of the charging circuit 14 are shown in FIGS. 2 and 4 in which similar components are labeled with similar reference numerals. As can be seen in FIG. 2, the charging circuit includes a battery connector 20, an adjustable current source 22, a biasing network 24, a protective relay 26, and a battery current detector 28. The battery connector 20 may be any type of interface that provides electrical coupling between the charging circuit 14 and the battery 16. When a battery 16 is attached to the connector 20 during operation, the charging circuit 14 is able to provide current to the battery 16 via the connector 20. A diode 30 is electrically coupled between the connector 20 and the battery current detector 28 to prevent any leakage discharge when the charging circuit 14 is inactive and to protect the charging circuit 14 in the event that a battery 16 is coupled to the connector 20 in reverse (i.e., with the incorrect polarity).

The adjustable current source 22 is electrically coupled between a power supply 32 and the battery connector 20 and is designed to supply current to the connector 20 (and, hence, the battery 16) at various charge rates. The adjustable current source 22 may include any type of device capable of providing a variable, controllable amount of current. In the illustrative embodiment of FIG. 2, the adjustable current source 22 is a bipolar junction transistor (BJT). The BJT 22 acts as an adjustable current source by controlling the amount of current permitted to flow between its emitter and collector terminals according to the current presented to its base terminal. In this configuration, the base terminal of the BJT 22 acts as a "bias terminal" that controls the current supplied by the adjustable current source (i.e., BJT 22). It is also contemplated that a field-effect transistor (FET) may be used as the adjustable current source 22. In such an embodiment, the gate terminal of the FET (which controls the amount of current permitted to flow between the source and drain terminals of the FET) acts as the bias terminal of the adjustable current source. It will be appreciated by persons of skill in the art that other types of adjustable current sources 22 may be used in other embodiments.

The biasing network 24 is electrically coupled to the bias terminal of the transistor 22 and is configured to adjust the current (or voltage) presented to the bias terminal (thereby adjusting the current supplied to the connector 20 by the transistor 22). In the illustrative embodiment of FIG. 2, the biasing network 24 includes multiple, parallel branches, each connected to one bit of a digital input signal. In FIG. 2, these bits are labeled CHARGE_RATE_0, CHARGE_RATE_1, CHARGE_RATE_2, CHARGE_RATE_3, and CHARGE_RATE_4 (from least significant to most significant) and form a 5-bit digital "word." Each parallel branch of the biasing network includes a switch 34 and a resistance 36. The switches 34 may be any type of electrical switch capable of opening and closing a circuit, such as transistors, logic gates, relays, and the like. In the illustrative embodiment, each switch 34 of the biasing network 24 is a BJT 34. Each transistor 34 receives a bit of the digital input signal at its bias terminal (i.e., the base terminal of the BJT) via a pair of bias resistors 38. When the logic value of the respecitive bit is "1," a voltage will be placed on the bias terminal of the transistor 34. This voltage will turn on the transistor, closing the circuit between the resistance 36 of that branch and ground.

The resistances 36 in each of the parallel branches of the biasing network 24 form a configurable resistor network 40. In the illustrative embodiment, when all of the transistors 34 are "off," the biasing network 24 will be a substantially open circuit. As such, no current will be presented to the bias terminal of the transistor 22 and no current will flow to the battery connector 20. When one or more of the transistors 34 is "on," current will flow through that branch of the resistor network 40. The current presented to the bias terminal of the transistor 22 (and, thus, the current generated by the transistor 22) will be determined by the overall resistance of the resistor network 40. The resistances 36 are sized so as to keep the transistor 22 in the linear region. So long as the resistances 36 have distinct values, each unique combination of parallel branches will result in a unique overall resistance for the network 40. In the illustrative embodiment, the resistances 36 associated with each branch of the network 40 are sized to increase in ohms from the most significant bit to the least significant bit. It will be appreciated that this configuration results in switching of the least significant bit having the smallest influence on the overall resistance of the network 40 and switching of the most significant bit having the largest influence on the overall resistance of the network 40. Furthermore, the overall resistance of the network 40 will decrease as the binary value of the digital input signal increases and vice versa.

Thus, the biasing network 24 provides logic-controllable rate selection switches for the battery charging system 10. The digital input signal (i.e., CHARGE_RATE_0, CHARGE_RATE_1, CHARGE_RATE_2, CHARGE_RATE_3, and CHARGE_RATE_4) that controls operation of the biasing network 24 may be generated by the processor 12. As discussed above, the processor 12 may be a multi-function processor (i.e., responsible for functions other than battery-charging) and may be remote from the charging circuit 14. Thus, the presently disclosed charging circuit 14 eliminates the need for a dedicated processor or controller. Instead, all logic is handled by the multi-function processor 12, which determines the desired charge rate for the battery 16. The processor 12 then generates the appropriate digital input signal and transmits this signal to the charging circuit 14. This digital input signal operates the transistors 34 to configure the resistor network 40. As described above, this biasing network 24 (i.e., the transistors 34 and resistances 36) biases the transistor 22 to supply current at the desired charge rate. Receiving a 5-bit digital input signal in the illustrative embodiment allows the charging circuit 14 to implement 32 different charge rates, which are selectable by the processor 12.

By appropriate sizing of the resistances 36, the current supplied by the transistor 22 may increase in a substantially linear fashion with increases in the binary value of the digital input signal. For instance, where the resistance 36 of each successive, parallel branch roughly doubles (from most significant to least significant bit), the resulting current outputs will be approximately linear with increases in the binary value of the digital input signal. In the illustrative embodiment, the resistances 36 of the respective parallel branches of resistor network 40 are 10 kΩ (CHARGE_RATE_4), 20 kΩ (CHARGE_RATE_{_}3), 40 kΩ (CHARGE_RATE_2), 80 kΩ (CHARGE_RATE_1), and 500 kΩ (CHARGE_RATE_0). By using parallel and series combinations, as shown in FIG. 2, many of these resistances 36 may be achieved using a single resistor type (e.g., 40 kΩ). It should be noted that the resistance 36 associated with the least significant bit of the digital input signal (i.e., CHARGE_RATE_0) may be larger than double the resistance 36 associated with the next bit of the digital input signal (i.e., CHARGE_RATE_1) and still result in substantially linear increases in output current. In fact, where the resistance 36 associated with the least significant bit (e.g., 500 kΩ) is at least four times greater than the resistance 36 associated with the next bit (e.g., 80 kΩ), the charging circuit 14 will possess increased granularity, particularly at low currents.

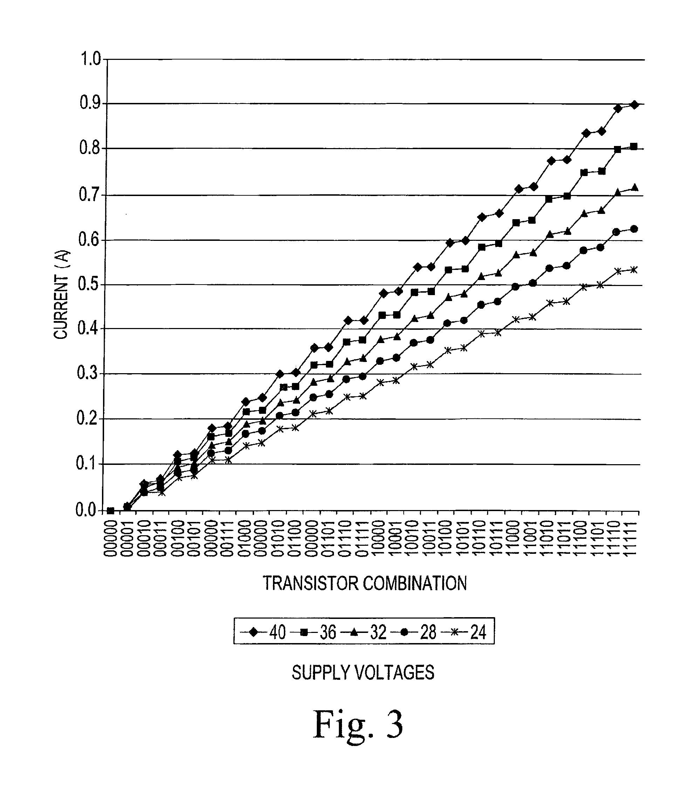

Utilizing the illustrative values above for the resistor network 40, the current supplied to the battery connector 20 for each digital input signal is predicted in the graph of FIG. 3. Each series in FIG. 3 represents the current output of the charging circuit 14 at a particular voltage level for power supply 32 (namely, 24, 28, 32, 36, and 40 volts). As can be seen, a wide range of currents are achievable at each of these voltage levels, including several currents in the range of 450 to 550 milliamps (a preferred range for bulk charging of the lead-acid battery 16 of the illustrative embodiment). This allows the processor to easily achieve the desired charge rate despite differences in battery voltage, supply voltage, and transistor-specific parameters (e.g., h_{FE}, thermal response). Current levels between those shown in FIG. 3 may also be achieved by sending PWM signals to one or more of the transistors 34.

Returning to FIG. 2, the charging circuit 14 also includes a protective relay 26 which is electrically coupled between the transistor 22 and the power supply 32. In the illustrative embodiment, the protective relay 26 is designed to default to an "open" or "off" position. When in this position, the protective relay 26 disconnects the transistor 22 from the power supply 32 and prevents the transistor 22 from supplying current to the connector 20. The protective relay 26 may be energized to a "closed" or "on" position when an enable signal (BAT_CHRG_ON) is received from the processor 12. When this enable signal is a logical "1," or high voltage, the switch 42 will operate to pass current through the circuit 44 and the protective relay 26. Whenever the protective relay is closed (i.e., whenever the enable signal is being received from the processor 12), the transistor 22 will be able to supply current at whatever desired rate is indicated by the digital input signal. It will be appreciated that a protective relay 26 that is designed to default to an "open" position will protect the battery 16 from overcharging during a loss of communication with the processor 12.

As can be seen in FIGS. 2 and 4, the charging circuit 14 further includes several feedback detectors 28, 50, 52 to enable the processor 12 to implement a closed-loop control system. In the illustrative embodiment, these feedback sensors include a battery current detector 28, a battery voltage detector 50, and a battery temperature sensor 52 which generate feedback signals labeled BAT_CURRENT_MON, VBAT_SENSE, and TEMP_SENSE, respectively. As shown in FIG. 4, the analog signals produced by the feedback detectors 28, 50, 52 may be converted to digital signals by an analog-to-digital ("A/D") converter 54 prior to transmission to the processor 12. The A/D converter 54 may be illustratively embodied as a TLC 1542 or a TLC1543, each commercially available from Texas Instruments Inc. of Dallas, TX, and each having 11 input channels, 10 conversion bits, and up to a 2.1 MHz clock frequency. In the illustrative embodiment, the A/D converter 54 communicates the feedback signals to the processor 12 over a serial peripheral interface ("SPI") bus. The cable select pin turns off the output of the A/D converter 54 when the SPI bus is in use and, thus, the processor 12 will bring LCB_SPI_CE2 low to enable the A/D converter 54.

Once received, the processor 12 may use the battery voltage and battery temperature signals to determine the SOC of the battery 16 and, thus, the desired charge rate with which to operate the charging circuit 14. For example, the processor 12 may cause the charging circuit 14 to provide a low current safe charge stage when the SOC is low, a constant current stage for moderate to high SOC, a constant voltage stage in the "overcharge" region, and a low current float stage when the battery is fully charged. The processor 12 may also use the battery current signal to confirm that the charging circuit is operating at the desired charge rate. If the charging circuit 14 is not operating properly (possibly due to the failure of a system component), the processor 12 may make necessary adjustments in the digital input signal transmitted to the charging circuit 14.

The battery current detector 28 of the illustrative embodiment (shown in FIG. 2) measures the current supplied by the transistor 22 to the battery connector 20 using a 500 mΩ sense resistor 56. The current through the sense resistor 56 is monitored by either high-side current sense integrated circuit ("IC") 58 or high-side current sense IC 60. Although only one of the ICs 58, 60 will be used in a given embodiment, the board may be configured for both ICs 58, 60 to provide manufacturing flexibility (if one of the chips is unavailable). Illustratively, the integrated circuits 58, 60 are respectively embodied as an HV7802, commercially available from Supertex, Inc., of Sunnyvale, CA, and an LTC6101, commercially available from Linear Technology Corp. of Milpitas, CA. These integrated circuits 58, 60 each output a feedback voltage signal (i.e., BAT_CURRENT_MON) that is set to approximately five times the voltage drop across the sense resistor 56. This feedback signal is clamped by a Schottky diode 62 to the 5V supply, giving a maximum measurable current of about 2A (the 2A current producing a voltage drop of 1 V and, thus, a feedback voltage signal of 5V).

The battery voltage detector 50 of the illustrative embodiment (shown in FIG. 4) measures a voltage, V_{BAT}, directly from the battery connector 20. V_{BAT} is put through a voltage divider 64 and the resulting voltage is clamped by a Schottky diode 62 (to the 5V supply) to bring this feedback voltage signal (i.e., VBAT_SENSE) to levels appropriate for measurement. The voltage divider 64 has a high impedance to reduce its drain on the battery 16. The battery temperature detector 52 of the illustrative embodiment (shown in FIG. 4) uses a negative temperature coefficient ("NTC") thermistor 66. As known in the art, NTC thermistors have a predictable, but non-linear, change in resistance with respect to temperature. The feedback voltage signal (i.e., TEMP_SENSE) output by the thermistor 66 is linearized using a series resistor 68 and a parallel resistor 70, both matched to the resistance of the thermistor 66 at the center point of the desired linear temperature range (e.g., 25°C). This feedback signal is also clamped by a Schottky diode 62 to the 5V supply. As described above, battery voltage and temperature information may be used by the processor 12 to determine when it is appropriate to use a bulk charge mode and to compensate target voltages.

Although certain illustrative embodiments have been described in detail above, variations and modifications exist.

## Claims

1. Apparatus comprising
a connector configured to electrically couple to a battery,
an adjustable current source capable of supplying current to the connector at a plurality of charge rates, and
a resistor network configured to bias the adjustable current source to supply current at one of the plurality of charge rates in response to a digital input signal.

2. The apparatus of claim 1, wherein the adjustable current source comprises a transistor having a bias terminal electrically coupled to the resistor network.

3. The apparatus of either claim 1 or claim 2, further comprising a plurality of switches configured to vary an overall resistance of the resistor network, each of the plurality of switches being controlled by a respective bit of the digital input signal.

4. The apparatus of claim 3, wherein each of the plurality of switches comprises a transistor having a bias terminal electrically coupled to the respective bit of the digital input signal.

5. The apparatus of claim 3, wherein the resistor network comprises a plurality of parallel branches, each of the plurality of parallel branches including one or more resistors and being electrically coupled to one of the plurality of switches.

6. The apparatus of claim 5, wherein the resistors of the plurality of parallel branches are configured such that the overall resistance of the resistor network decreases as a binary value of the digital input signal increases.

7. The apparatus of claim 6, wherein the current supplied by the adjustable current source increases in a substantially linear fashion with increases in the binary value of the digital input signal.

8. The apparatus of any preceding claim, further comprising a multi-function processor configured to determine a desired charge rate from among the plurality of charge rates and to generate the digital input signal corresponding to the desired charge rate.

9. The apparatus of claim 8, wherein the multi-function processor is configured to determine the desired charge rate in response to one or more feedback signals indicating either the current supplied by the adjustable current source, the state of charge of a battery electrically coupled to the connector, or both.

10. The apparatus of claim 9, further comprising an analog-to-digital converter which processes the one or more feedback signals before transmission to the multi-function processor.

11. The apparatus of claim 8, further comprising a relay configured to be electrically coupled between the adjustable current source and a power supply, the relay configured to disconnect the adjustable current source from the power supply if an enable signal from the multi-function processor is not received.

12. A method of charging a battery, the method comprising
receiving a digital input signal having a plurality of bits, the digital input signal indicating a desired charge rate for the battery,
configuring a resistor network in response to the digital input signal,
biasing an adjustable current source using the configured resistor network, and
supplying current to the battery at the desired charge rate using the adjustable current source.

13. The method of claim 12, wherein configuring the resistor network comprises operating a plurality of switches to vary an overall resistance of the resistor network, each of the plurality of switches being controlled by one of the plurality of bits of the digital input signal.

14. The method of claim 13, wherein operating the plurality of switches comprises applying each of the plurality of bits to a bias terminal of a transistor.

15. The method of claim 12, wherein biasing the adjustable current source comprises applying a current or a voltage generated by the resistor network to a bias terminal of a transistor.
